# EUROPÄISCHE PATENTSCHRIFT

(11) **EP 1 609 675 B1**
(45) Veröffentlichungstag und Bekanntmachung des Hinweises auf die Patenterteilung: **04.10.2006**
(21) Anmeldenummer: 04014765.4
(22) Anmeldetag: 24.06.2004
(51) Int. Cl.: B60Q 7/00

(54) **Zusammenlegbares Warndreieck**
Foldable warning triangle
Triangle d'avertissement pliable

(43) Veröffentlichungstag der Anmeldung: 28.12.2005
(73) Patentinhaber: Gebra GmbH & Co. Sicherheitsprodukte KG, 53773 Hennef (DE)
(72) Erfinder: Pimmer, Holger, 53797 Lohmar (DE); Walgenbach, Reinhold, 53773 Hennef (DE); Gadomski, Karsten, 53773 Hennef (DE); Stei, Alexander, 51545 Waldbröl (DE)
(74) Vertreter: Brandenburg, Thomas

(56) Entgegenhaltungen:
- EP-A- 1 028 028
- DE-A- 10 043 292
- DE-A- 19 823 201
- DE-U- 1 973 327
- US-A- 3 766 881
- US-A- 3 934 541
- US-A- 4 805 550

## Beschreibung

Die Erfindung betrifft ein zusammenlegbares Warndreieck zur Mitführung in Kraftfahrzeugen mit einer verbesserten Standfestigkeit bei Wind, wobei die verbesserte Standfestigkeit durch Verwendung eines Flügelprofils unter Ausnutzung des Bernoulli-Effektes erreicht wird.

Im praktischen Gebrauch sind bei zusammenlegbaren Warndreiecken sowohl die Packmaße als auch das Gewicht von großer Bedeutung. Für die Unterbringung des Warndreiecks in Kraftfahrzeugen ist eine kompakte, zusammenlegbare Form und eine geringe Breite des so gebildeten Paketes sowie ein geringes Gewicht von Vorteil. Mit den allgemeinen Bestrebungen Warndreiecke in ihrer Transportform klein und von geringem Gewicht zu halten, um somit die Unterbringung im Fahrzeug zu erleichtern, wird umgekehrt die Standfestigkeit unter Windlast verringert. Hierbei liegt das Problem zugrunde, dass die Fläche des ausgeklappten Warndreieckes nicht verringert werden kann, da sonst die Warnfunktion verloren geht. Häufig kommen hierzu auch gesetzliche Vorgaben über eine Mindestgröße des Dreieckes hinzu, die nicht unterschritten werden darf. Die Segelfläche eines Warndreieckes, gebildet durch die Reflektorleisten sowie darin eingespanntem Tuch ist somit kaum verringerbar. Bei gleichzeitiger Verringerung des Gesamtgewichtes des Warndreieckes führt dies zu einer verringerten Standfestigkeit bei Windlast. Übliche und bekannte Maßnahmen zur Verbesserung der Standfestigkeit bei Windlast bestehen beispielsweise darin die Standfläche zu vergrößern.

Aus der DE 101 58 192 ist ein Warndreieck mit einem Basisteil bekannt, an dem eine dreieckförmige, reflektierende Warnvorrichtung angebracht ist, an dessen Enden jeweils zwei Standbeine schwenkbar gelagert sind. Dieses Basisteil ist im Querschnitt derart geformt, dass es als Spoiler wirkt. Hierdurch soll erreicht werden, dass eine optimierte Bodenhaftung erzielt werden kann. Dies setzt aber voraus, dass die ausschwenkbaren Standbeine das Basisteil auch auf dem Boden halten, da sonst durch den Luftwiderstand der Spoilereffekt aufgehoben wird, weil der Luftstrom auch unterhalb des breiteren Basisteils strömt.

Aus der DE 295 01 320 U1 sind Standfüße aus Leichtbaumaterialien mit aussenliegenden Formgewichten und Antirutschplatten bekannt sowie mit Standfuß-Profil-Windspoilerflächen zur Gewichtserzeugung und Windumleitung beim Warndreieck für wenig Gesamtgewicht zum Mitführen in Fahrzeugen und dergleichen beschrieben. Diese Standfüße oder Stäbe aus Leichtbaumaterialien bestehen aus Flach-Profil-Band-Streifenmaterial und dergleichen, die ganz oder teilweise so hergestellt werden, dass sie als Windgleiter oder Windspoiler bei einer Luftmasseneinwirkung die Standfüße oder Stäbe auf den Boden pressen. Hierbei ist problematisch, dass durch die Anbringung von Windprofilen an den Standfüßen oder Stäben ein Angriff der Luftmassen aus unterschiedlichen Richtungen dazu führt, dass das entsprechende Warndreieck die notwendige Standfestigkeit bei Winddruck nicht erreicht.

Die Verwendung von Spoilern zeigt den Nachteil, dass sie den Windwiderstand gleichzeitig erhöhen. Die Wirkung eines Spoilers beruht darauf, dass die daran anströmende Luft umgelenkt wird, wobei eine Kraft auf den Spoiler wirkt, die im Wesentlichen den Anpressdruck bewirkt. Stärke und Richtung des Kraftvektors sind abhängig von der Ausgestaltung des Spoilers, der Windgeschwindigkeit sowie dem Grad der Ablenkung der Luftmassen. Nachteilig ist jedoch, dass die Ablenkung der Luftmassen gleichzeitig einen erhöhten Luftwiderstand gegen die anströmende Luft mit sich bringt, was wiederum nachteilig hinsichtlich der Standfestigkeit bei Windlast ist. Weiterhin ist nachteilig, dass ein Spoiler nur insofern wirksam ist, als die Luftmassen ihn im Wesentlichen von vorn anströmen. Soweit eine Anströmung von der Rückseite des Spoilers erfolgt, zeigt dieser keine Wirkung hinsichtlich eines gesteigerten Anpressdruckes. Im Gegenteil, der Luftwiderstand wird durch die Ausformung des Spoilers üblicherweise noch weiter erhöht gegenüber einer Anströmung von der Vorderseite. Letzteres läßt sich nur insoweit vermeiden, als dass der Spoiler spiegelsymmetrisch ausgebildet ist. Ein gattungsmäßiges zusammenlegbares Warndreieck ist aus EP-A-1028028 bekannt.

Aufgabe der vorliegenden Erfindung ist es die Nachteile des Standes der Technik zu überwinden und ein zusammenlegbares Warndreieck bereitzustellen, das bei geringem Eigengewicht sowie kleinen Packmaßen verbesserte Standfestigkeit bei Windlast aufweist.

Die Aufgabe wird durch ein zusammenlegbares Warndreieck gemäß den technischen Merkmalen des Anspruches 1 gelöst.

Die Erfindung geht von einem gattungsgemäßen zusammenlegbaren Warndreieck zur Mitführung in Kraftfahrzeugen aus, wobei das zusammenlegbare Warndreieck eine Basisreflektorleiste umfasst, an der direkt oder über eine Basisplatte ausschwenkbare Standbeine angebracht sind, und wobei an der Basisreflektorleiste und/oder der Basisplatte schwenkbar angebrachte Seitenreflektorleisten zugeordnet sind, die zwischen einer ausgefahrenen Sichtlage und einer vor oder hinter der Basisreflektorleiste eingefahrenen Transportlage beweglich sind, und wobei an der Basisreflektorleiste und/oder der Basisplatte Halterungen für bewegliche Standbeine vorhanden sind.

Reflektorleisten im Sinne der vorliegenden Erfindung sind Leisten aus einem geeigneten Material, vorzugsweise Kunststoff, bei denen auf wenigstens einer Seite Reflektions- und/oder Fluoreszenzmittel angebracht sind.

Zur Vereinfachung der Beschreibung wird im Folgenden im Wesentlichen der Begriff Basisplatte verwendet. Soweit nicht anders ausgeführt, bedeutet dieser im Sinne der vorliegenden Beschreibung jeweils Basisreflektorleiste und/oder Basisplatte.

Erfindungsgemäß ist unterhalb der Basisplatte des zusammenlegbaren Warndreieckes ein Flügelprofil angeordnet. Die Anordnung des Flügelprofils erfolgt dabei so, dass dieses im Zwischenraum zwischen der Oberfläche des Bodens, auf dem das Warndreieck aufgestellt wird, und der Unterkante der Basisplatte liegt. Das Flügelprofil ist dabei sowohl von der Basisplatte als auch der Oberfläche des Bodens, auf dem das Warndreieck aufgestellt ist, hinreichend beabstandet, dass die anströmende Luft sowohl oberhalb als auch unterhalb des Flügelprofiles vorbeiströmen kann.

Das Flügelprofil weist einen im Querschnitt im Wesentlichen spiegelbildlichen Aufbau auf. Das heisst, dass das in Anströmrichtung von vorn oder hinten des Warndreieckes die Wirkung identisch ist.

Auf der der Standfläche zugewandten Seite ist das Flügelprofil gewölbt ausgeführt. Auf der der Basisplatte zugewandten Seite zeigt das Flügelprofil vorzugsweise eine plane Oberfläche. In einer weniger bevorzugten Ausführungsform kann die der Basisplatte zugewandte Seite auch in Form einer Hohlkehle ausgeformt sein.

Beim Anströmen der Luft an das Flügelprofil werden die anströmenden Luftmassen durch das Profil geteilt, wobei die auf der Unterseite des Profils vorbeiströmenden Luftmassen eine längere Wegstrecke zurücklegen als die an der Oberseite des Profils vorbeiströmenden Luftmassen. Es kommt hierdurch zu einer Kraftwirkung, die einen Anpressdruck in Richtung auf den Untergrund erzeugt. Dies ist auch als Bernoulli-Effekt bekannt.

Durch den Kunstgriff das Flügelprofil spiegelsymmetrisch auszuführen tritt der Bernoulli-Effekt sowohl bei einer Anströmung von der Vorderseite als auch von der Rückseite des Warndreieckes auf. Bei einer Anströmung von der schmalen Seite des Warndreieckes kommt es zu keinerlei Effekt. Dies ist auch nicht nötig, da das seitliche Profil eines Warndreieckes derartig schmal ist, dass der Windwiderstand vernachlässigbar ist.

Das Flügelprofil kann unterhalb der Basisplatte so angeordnet sein, dass es zwischen den Enden der Basisplatte durchgehend ist. In weiteren Ausführungsformen der vorliegenden Erfindung erstreckt sich das Flügelprofil über 20 - 90 % der Länge der Basisplatte. Dabei kann das Profil einstückig sein und in Längserstreckung mittig unterhalb der Basisplatte angeordnet sein. In einer bevorzugten Ausführungsform ist das Flügelprofil zweistückig ausgeformt, wobei sich die jeweiligen Profile von den Enden der Basisplatte in deren Mittelrichtung erstrecken. Im Mittelbereich der Basisplatte wird somit ein Durchbruch ausgebildet, an dem die Basisplatte nicht mit einem Flügelprofil versehen ist.

In einer weiteren Ausführungsform des erfindungsgemäßen Warndreieckes weist die Basisplatte ein Verstärkungselement auf, um ein Durchbiegen der Basisplatte in der Ebene des Warndreieckes zu verhindern. Das Verstärkungselement ist dabei in Form einer Leiste ausgebildet, die sich an der dem Untergrund zugewandten Seite der Basisplatte befindet. Die Leiste hat eine Erstreckung senkrecht zur Ebene der Basisplatte und ist kraftschlüssig mit dieser verbunden. Eine einstückige Ausführung der Verstärkungsleiste mit der Basisplatte ist ebenfalls möglich.

Erfindungsgemäß kann die Leiste in ihrer Längserstreckung Schlitze oder Durchbrüche aufweisen. Die Schlitze oder Durchbrüche befinden sich erfindungsgemäß anliegend an die Basisplatte. Die Größe und Ausformung der Schlitze und/oder Durchbrüche sind so gewählt, dass die mechanische Stabilität der Versteifungsleiste im Wesentlichen erhalten bleibt, während ein Durchströmen der auf die Basisplatte auftreffenden und von ihr abgelenkten Luftmassen möglich ist.

Bei einem Anströmen von Luftmassen gegen das Warndreieck werden die Strömungsanteile, die auf die Basisplatte gerichtet sind, dort geteilt, wobei ein Teil über der Basisplatte hinwegströmt. Der andere Teil strömt nach unten ab. Durch den zuvor beschriebenen Kunstgriff die Verstärkungsleiste mit Durchbrüchen und/oder Ausnehmungen zu versehen kann der nach unten gerichtete Luftstrom im Wesentlichen ungehindert passieren und in den durch die Verstärkungsleiste und den Flügel ausgebildeten Strömungskanal eintreten.

Es zeigte sich, dass durch diese Maßnahme die Strömungsgeschwindigkeit in dem zuvor genannten Strömungskanal, gebildet durch die Versteifungsleiste sowie die Oberseite des Flügels, erhöht wird. Dies wiederum hat die Verstärkung des Bernoulli-Effektes und damit eine Erhöhung des Anpressdruckes zur Folge.

Bei der erfindungsgemäßen Konstruktion hat das Warndreieck an den unteren Ecken des Leistendreiecks Gelenke. Die Zusammenlegbarkeit dieses Dreiecks wird dadurch erreicht, dass mindestens eine Seitenleiste mit einem Gelenk versehen ist. Die Leiste kann zur Mitte des Dreiecks einknicken, so dass die beiden einteiligen Seitenreflektorleisten einander näherkommen können und übereinander in Lage gebracht werden können. Diese können separat gefertigt und dann durch die genannten Gelenke mit Basisreflektorleiste oder Basisplatte verbunden werden. Anschließend können flexible Koppelglieder montiert werden.

In der Innenfläche des durch die Reflektorleisten gebildeten Dreiecks ist in grundsätzlich bekannter Weise ein weiteres Dreieck aus einem flexiblen Material gespannt. Das flexible Material kann aus geeigneten Materialien wie einem Tuch oder einer Kunststoffbahn gefertigt und gegebenenfalls mit Reflektionsmitteln versehen sein.

Das durch das flexible Material gebildete innere Dreieck innerhalb des Dreieckes aus den Reflektorleisten dient in bekannter Weise dazu, die Sichtfläche und damit die Warnfunktion des Warndreieckes zu vergrößern. Um die Windangriffsfläche zu verringern, wird bekanntermaßen die von dem flexiblen Material im Inneren des durch die Reflektorleisten gebildeten Dreiecks überspannte Fläche mit einem Ausschnitt, vorzugsweise in dreieckiger Form, versehen. Der Ausschnitt bildet dann einen Winddurchlass.

Nach dem Stande der Technik ist das flexible Material an den jeweiligen Drehpunkten bzw. Gelenken der Reflektorleisten mit geeigneten Mitteln befestigt, wobei sich das aus dem flexiblen Material gebildete Dreieck frei hinter der Ebene des aus den Reflektorleisten gebildeten Dreiecks befindet.

Diese bekannte Ausführung hat den Nachteil, dass bei Wind von vorn sich das aus dem flexiblen Material gebildete Dreieck durch Wirkung der Luftmassen aufbauscht und eine Segelwirkung entfaltet. Die Segelwirkung führt zu einer abzulehnenden Instabilität des aufgestellten Warndreieckes.

Hier setzt eine weitere Neuerung der Erfindung an. Überraschenderweise zeigte sich, dass durch eine Befestigung des flexiblen Materials dergestalt, dass es an der Basisleiste befestigt ist, eine zusätzliche Spoilerwirkung eintritt. Eine geeignete Befestigung des flexiblen Materials an der Basisleiste kann durch Aufkleben geschehen. Eine andere Möglichkeit besteht darin, dass das flexible Material mittels einer weiteren Leiste auf der Rückseite der Basisleiste, d.h. der den Reflektionsmitteln abgewandten Seite, eingeklemmt wird. Gegebenenfalls kann die weitere Leiste ebenfalls mit Reflektionsmitteln versehen sein. Ein Einklemmen zwischen Basisplatte und Basisreflektorleiste ist ebenfalls möglich.

Die Wahl der Mittel ist dabei unerheblich, soweit nur sichergestellt ist, dass die flexible Bahn erst ab der Oberkante der Basisplatte oder Basisreflektorleiste abknicken kann.

Es zeigte sich, dass beim Durchstreifen der Luftmassen durch die in der dreiecksförmig gebildeten Bahn verbliebene Öffnung der Abschnitt des flexiblen Materials, anliegend an der Basisleiste, in Durchströmrichtung abgeknickt wird. Der Grad des Abknickens wird durch die zur oberen Spitze des Warndreieckes verlaufenden Abschnitte des flexiblen Materials begrenzt. Durch diese Maßnahme wirkt der Abschnitt des flexiblen Materials, der an der Basisleiste anliegt, als Spoiler und erhöht den Anpressdruck des Warndreieckes auf den Untergrund und damit die Standfestigkeit.

Bei der zuvor genannten Ausführungsform sind die Abschnitte des flexiblen Materials, die an den sich nach oben erstreckenden Seitenreflektorleisten anliegen, nicht mit diesen Seitenreflektorleisten verbunden. Die Fixierung erfolgt ausschließlich im Bereich der oberen Spitze des Warndreiecks, vorzugsweise am Koppelglied. Es zeigte sich, dass die zuletzt genannte Maßnahme zur Erhöhung der Standfestigkeit des Warndreieckes bei Wind wesentlich ist. Durch die Maßnahme die beiden an den sich nach oben erstreckenden Reflektorleisten anliegenden Streifenabschnitte des elastischen Materials nicht zu fixieren, können die durchströmenden Luftmassen beidseitig an den Streifenabschnitten des elastischen Bahnmaterials vorbeiströmen. Es wird hier kein Spoilereffekt bewirkt, der einen Kraftvektor erzeugen könnte, der von der Standfläche des Warndreieckes weggerichtet ist und somit für die Stabilität nachteilig wäre.

Die nachfolgenden Zeichnungen mit ihren detaillierten Beschreibungen einiger Ausführungsformen des erfindungsgemäßen Warndreiecks dienen zur näheren Erläuterung der Erfindung, ohne Sie jedoch auf diese Ausführungen zu beschränken.

### Es zeigen die

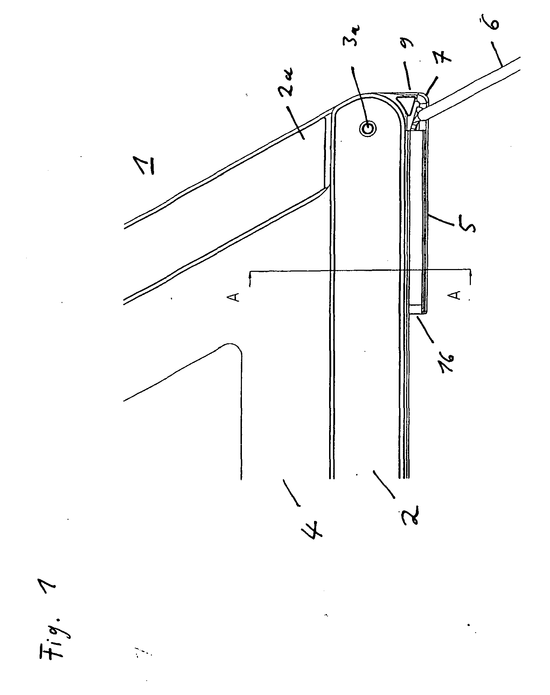

- Figur 1: Teilseitenansicht einer ersten Ausführungsform des erfindungsgemäßen Warndreiecks;
- Figur 1 a: Schnitt A-A der Teilseitenansicht nach Figur 1
- Figur 2: Teilseitenansicht einer zweiten Ausführungsform des erfindungsgemäßen Warndreiecks;
- Figur 2a: Schnitt B-B der Teilseitenansicht nach Figur 2
- Figur 3: eine Draufsicht der Ausführungsform des erfindungsgemäßen zusammenlegbaren Warndreiecks im ausgeklappten Zustand nach Figur 1
- Figur 3b: eine Draufsicht der Ausführungsform des erfindungsgemäßen zusammenlegbaren Warndreiecks im ausgeklappten Zustand nach Figur 2
- Figur 4a: entspricht der Figur 1a unter anströmendem Wind
- Figur 4b: einen Schnitt einer weiteren Ausführungsform unter anströmendem Wind

Die Figur 1 zeigt die Teilseitenansicht einer ersten Ausführungsform des erfindungsgemäßen zusammenlegbaren Warndreiecks 1. An der Basisreflektorleiste 2 sind Gelenke 3 und 3a (in dieser Abbildung nicht gezeigt) angeordnet, um die die Reflektorleiste 2a bzw. 2b schwenkbar angebracht ist. Die Basisreflektorleiste 2 trägt vorderseitig einen Reflektor. Die Reflektorleisten 2a und 2b tragen vorderseitig ebenfalls Reflektoren und haben am oberen Ende eine Rastverbindung 15 (hier nicht dargestellt aufgrund des graphischen Schnittes), durch die das Warndreieck im ausgeklappten Zustand stabilisiert wird. Zusätzlich ist in der Figur 1 das aufgespannte flexible Material 4 dargestellt, bildend ein weiteres Dreieck. Hinter der Basisreflektorleiste 2 befindet sich die Basisplatte 9. In der Platte 9 ist an der äußeren Ecke des Warndreiecks der Lagerkörper 7 für die Aufnahme der Standbeine 6 angeordnet. Unterhalb der Standbeine befindet sich das Flügelprofil 5, das durch einen Steg 16 fixiert wird.

Die Figur 1 a zeigt einen Schnitt A-A der Teilseitenansicht des erfindungsgemäßen zusammenlegbaren Warndreiecks gemäß Figur 1. Unterhalb der Basisplatte 9 ist ein Verstärkungselement 18 angeformt. Zwischen der Platte 9 und der Basisreflektorleiste 2 ist die Bahn aus flexiblem Material 4 aufgenommen. In der Basisreflektorleiste 2 ist ein Reflektor 17 eingefügt.

In der dargestellten Ausführungsform mit Verstärkungselement 18 bildet der Zwischenraum zwischen dem Verstärkungselement 18 und dem Flügelprofil 5 einen Strömungskanal 19. Im zusammengelegten Zustand des Warndreiecks kann der Strömungskanal 19 die Standbeine 6 aufnehmen. Das Flügelprofil 5 weist eine Wölbung in Richtung auf die Standfläche auf.

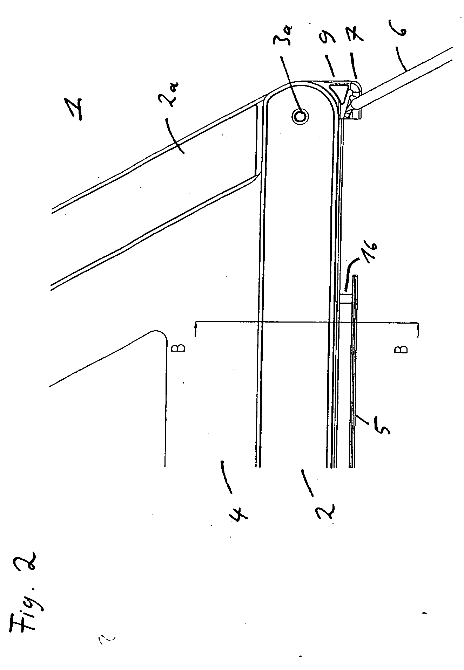

Die Figur 2 zeigt eine weitere Ausführungsform des erfindungsgemäßen Warndreiecks analog der Figur 1. Der Unterschied im vorliegenden Fall ist jedoch, dass das Flügelprofil 5 nicht wie in der Figur 1 von den äußeren Ecken des Warndreiecks zur Mitte der Basisreflektorleiste führt, sondern umgekehrt von der Mitte der Basisreflektorleiste 3 nach aussen geführt wird. Das Flügelprofil 5 wird auch in diesem Fall über einen Steg 16 stabilisiert. Vorteilhafterweise dient dieser Steg zur Sicherstellung und Vibrationsfreiheit des Flügelprofils 5 bei Luftmassendurchgang. Der Steg 16 kann in allen Ausführungsformen mit Rastmitteln zur Befestigung und Halterung der Standbeine 6 versehen sein.

Die Figur 2a zeigt den Schnitt B-B durch das erfindungsgemäße Warndreieck gemäß der Figur 2. Die Figur entspricht der Figur 1 a, wobei weiterhin der aus der Zeichenebene versetzte Steg 16 ersichtlich ist.

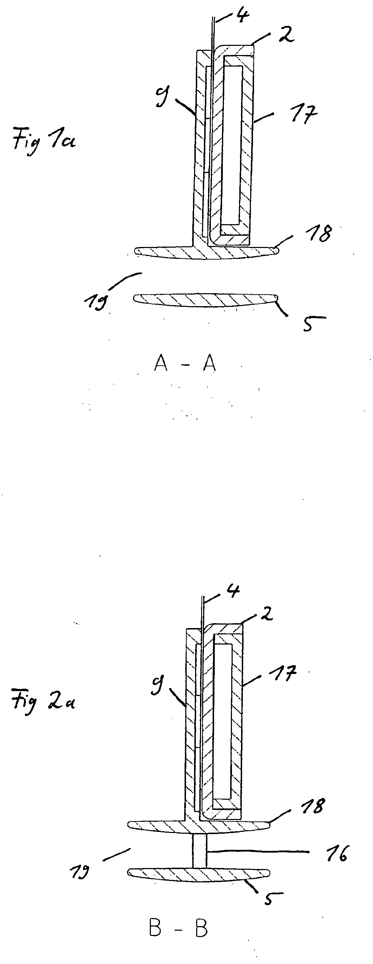

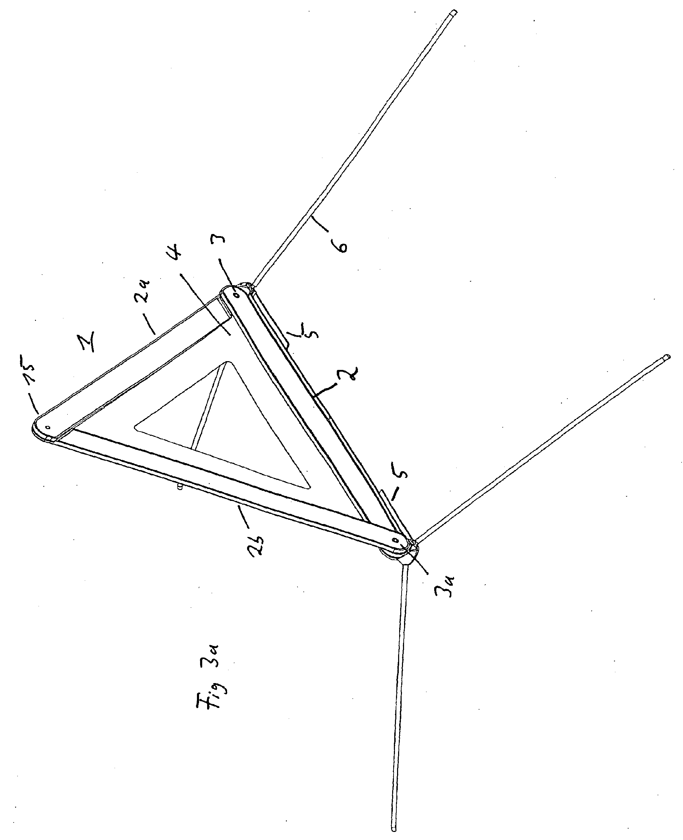

Die Figur 3a zeigt ein aufgeklapptes stehendes erfindungsgemäßes Warndreieck. Zu erkennen sind die ausgeklappten Standbeine 6, die Basisreflektorleiste 2 sowie die Seitenreflektorleisten 2a und 2b, die über das Gelenk 3 und 3a sowie der Rastverbindung 15 miteinander verbunden sind.

Unterhalb der Basisplatte 9 ist eine der Ausführungsformen des Flügelprofils 5 zu erkennen. Hierbei ist das Flügelprofil 5 so angeordnet, dass es von den äußeren Enden der Platte 9 zur Mitte der Platte 9 führt. Im vorliegenden Fall überspannt das Flügelprofil 5 ca. 40 % der Basisplatte.

Geeigneterweise überspannt das Flügelprofil 20 bis 90 %, bevorzugt 40 bis 60 % der Basisplatte 9. Dabei kann das Flügelprofil 5 einstückig oder mehrstückig ausgeführt sein.

Die Figur 3b zeigt eine weitere Ausführungsform der vorliegenden Erfindung, wobei das Flügelprofil im vorliegenden Fall ausgehend von der Mitte des Warndreiecks zu den äußeren Begrenzungen führt.

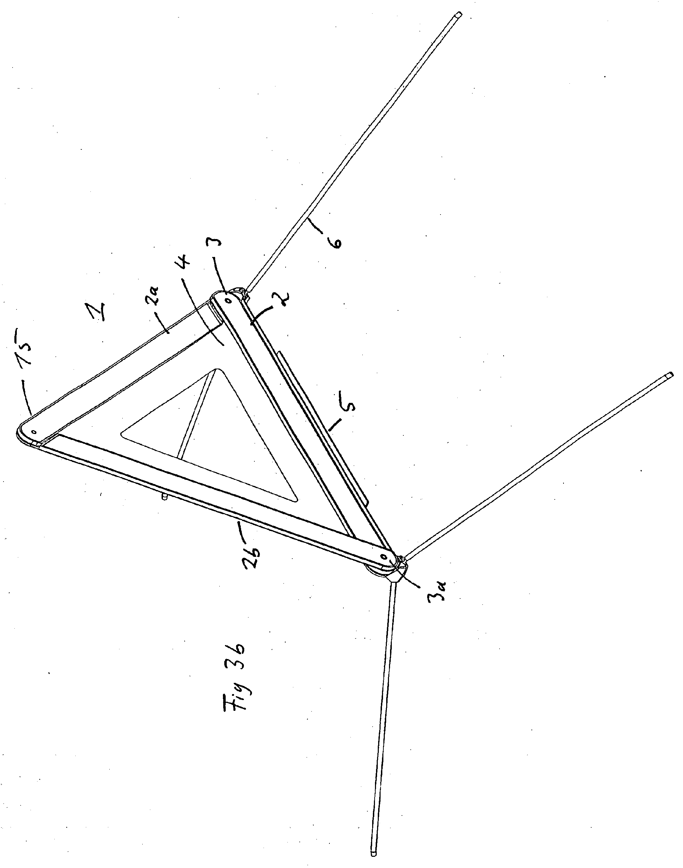

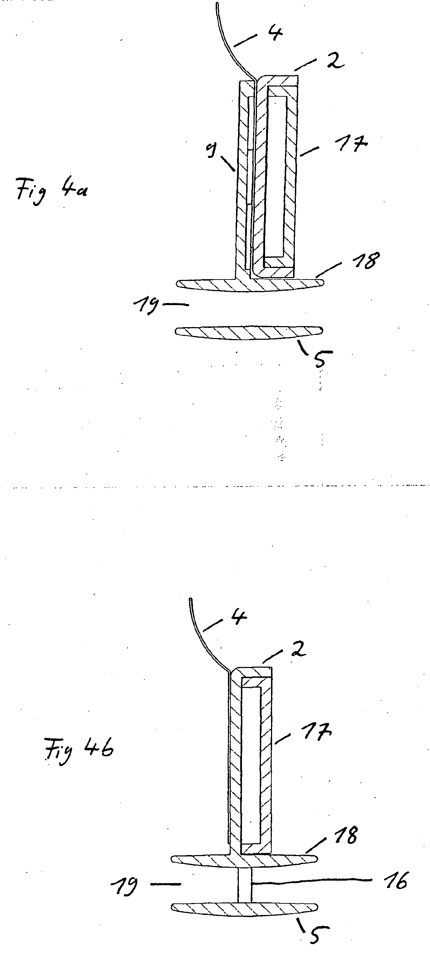

Die Figur 4a entspricht der Figur 1 a, jedoch unter Windlast.

In der dargestellten Ausführungsform ist das bahnartige flexible Material 4 zwischen der Basisplatte 9 und der Basisreflektorleiste 2 angeordnet. Erfindungswesentlich ist dabei, dass das bahnartige flexible Material 4 zwischen der Basisplatte 9 und der Basisreflektorleiste 2 derartig mit geeigneten Mitteln fixiert ist, dass der flexible Bereich des bahnartigen Materials 4 erst oberhalb der Basisplatte 9 bzw. der Basisreflektorleiste 2 beginnt. Unter geeigneten Mitteln wären zum Beispiel Einklemmen oder Verkleben zu verstehen.

Unter anströmendem Wind, der in der dargestellten Zeichnung von rechts kommend wäre, wird das bahnartige Material 4 in Windrichtung verformt und bildet einen spoilerartigen Windabweiser. Die auftreffenden Luftmassen werden durch den unter Windlast spoilerartig geformten flexiblen Abschnitt 4 nach oben umgelenkt, wodurch ein Kraftvektor in Richtung auf die Standfläche erzeugt wird. Letzteres führt zu einer verbesserten Standsicherheit des Warndreieckes. Die gleiche Wirkung tritt selbstverständlich auch bei einer Anströmung von der Gegenseite ein.

Figur 4b zeigt eine weitere Auführungsform des erfindungsgemäßen Warndreieckes entsprechend zu Figur 4 a. In dieser Ausführungsform weist das Warndreieck jedoch keine Basisplatte 9 auf. Die Basis wird hier allein durch die Basisreflektorleiste 2 gebildet. Das bahnartige flexible Material 4 ist auf der Rückseite, das heisst der dem Reflektor abgewandten Seite der Basisreflektorleiste 2 befestigt. Die Befestigung kann geeigneterweise durch Kleben oder Anvulkanisieren geschehen. Die Spoilerwirkung des bahnartigen Materials 4 entspricht der gemäß den Ausführungen zu Figur 4a.

Das erfindungsgemäße zusammenlegbare Warndreieck hat im zusammengelegten Zustand nur geringe Breite. Beim Aufrichten der Seitenreflektorleisten 2a und 2b stellt sich automatisch das Dreieck aus flexiblem Material 4 mit auf. Beim Herabschwenken der Reflektorleisten 2a und 2b wird das Dreieck automatisch auf die Breite der Basisplatte 9 zusammengelegt, wobei die Bewegung des Dreiecks 4 umgekehrt wie beim Aufrichten des Warndreiecks 1 erfolgen. Das Warndreieck 1 zeichnet sich durch einfache Handhabung und geringes Gewicht aus.

Bezugszeichenliste
- 1: zusammenlegbares Warndreieck
- 2: Basisreflektorleiste
- 2a: Seitenreflektorleisten
- 2b: Seitenreflektorleisten
- 3: Gelenk
- 3a: Gelenk
- 4: Bahn aus flexiblem Material
- 5: Flügelprofil
- 6: Standbein
- 7: Lagerkörper
- 8: -
- 9: Basisplatte
- 10: -
- 11: -
- 12: -
- 13: -
- 14: -
- 15: Rastverbindung
- 16: Steg
- 17: Reflektormittel
- 18: Verstärkungselement
- 19: Strömungskanal

## Patentansprüche

1. Zusammenlegbares Warndreieck zur Mitführung in Kraftfahrzeugen, umfassend eine Basisreflektorleiste sowie optional eine Basisplatte, weiterhin umfassend ausschwenkbare Standbeine und an der Basisreflektorleiste und/oder der Basisplatte schwenkbar angebrachte Seitenreflektorleisten, wobei die Seitenreflektorleisten zwischen einer ausgefahrenen Sichtlage und einer vor oder hinter ihrer Reflektorleiste eingefahrenen Lage beweglich sind,
**dadurch gekennzeichnet, dass**
unterhalb des Basisreflektorteils und/oder der Basisplatte ein Flügelprofil angeordnet ist, wobei das Flügelprofil auf der der Basisplatte und/oder dem Basisreflektorteil zugewandten Seite plan ist oder eine Hohlkehle aufweist und wobei weiterhin das Flügelprofil auf der Basisplatte und/oder dem Basisreflektorteil abgewandten Seite konvex gewölbt ist.

2. Warndreieck nach Anspruch 1, **dadurch gekennzeichnet, dass** Flügelprofil im Querschnitt spiegelsymetrisch ist.

3. Warndreieck nach Anspruch 1 oder 2, **dadurch gekennzeichnet, dass** das Flügelprofil unterhalb der Basisreflektorleiste und/oder der Basisplatte durchgängig ist.

4. Warndreieck nach Anspruch 1 oder 2, **dadurch gekennzeichnet, dass** das Flügelprofil unterhalb der Basisreflektorleiste und/oder der Basisplatte mehrstückig ist.

5. Warndreieck nach einem der vorhergehenden Ansprüche, **dadurch gekennzeichnet, dass** die Basisreflektorleiste und/oder der Basisplatte in ihrer Längserstreckung zu 20 bis 90 % , bevorzugt 40 bis 60%, von wenigstens einem Flügelprofil überstreckt werden.

6. Warndreieck nach einem der vorhergehenden Ansprüche, **dadurch gekennzeichnet, dass** zwischen dem Flügelprofil sowie der Basisreflektorleiste und/oder der Basisplatte wenigstens ein Steg angeordnet ist, wobei der Steg Rastmittel zur Aufnahme und Halterung von eingeschwenkten Standfüßen aufweist.

7. Warndreieck nach einem der vorhergehenden Ansprüche, **dadurch gekennzeichnet, dass** die Basisreflektorleiste und/oder Basisplatte eine Verstärkungsleiste aufweisen, wobei zwischen der Verstärkungsleiste und dem Flügelprofil ein Strömungskanal gebildet wird.

8. Warndreieck nach Anspruch 7, **dadurch gekennzeichnet, dass** die Verstärkungsleiste Ausnehmungen aufweist, um die anströmenden Luftmassen wenigstens teilweise in den Strömungskanal zu leiten.

9. Warndreieck nach einem der vorhergehenden Ansprüche, **dadurch gekennzeichnet, das** in dem durch die Reflektorleisten gebildeten Dreieck ein weiteres Dreieck aus einem flexiblem Material angeordnet ist, welches einen dreiecksförmigen Ausschnitt als Winddurchlass aufweist, wobei die untere Bahn des dreiecksbildenden flexiblen Materials über ihre gesamte Längserstreckung an der Basisplatte und/oder der Basisleiste dergestalt befestigt ist, das ein Abknicken der flexiblen Bahn nur oberhalb der oberen Kante der Basisplatte und/oder Basisleiste möglich ist.

10. Warndreieck nach Anspruch 9, **dadurch gekennzeichnet, dass** die den Seitenreflektorleisten zugeordneten Bahnen nicht mit den Seitenreflektorleisten formschlüssig verbunden sind.

## Claims

1. Collapsible warning triangle for carrying along in motor vehicles, comprising a base-reflector-strip as well as an optional base-plate, furthermore comprising outward-swivelling supporting legs and attached to the base-reflector-strip and/or the base-plate swivelling side-reflector-strips, wherein the side-reflector-strips are movable from an extended in-sight-position to a retracted position in front or behind the reflector-strip and vice versa, **characterized in that** underneath the base-reflector-components and/or the base-plate an air foil is arranged, wherein the air foil is planar or has a groove on the side directed to the base-plate and/or the base-reflector-component and wherein furthermore the air foil is convexly curved on the side facing away from the base-plate and/or the base-reflector-component.

2. Warning triangle according to claim 1, **characterized in that** the air foil has a mirror-symmetrical cross section.

3. Warning triangle according to claim 1 or 2, **characterized in that** the air foil extends continuously beneath the base-reflector-strip and/or the base-plate.

4. Warning triangle according to claim 1 or 2, **characterized in that** the air foil beneath the base-reflector-strip and/or the base-plate is made up of several parts.

5. Warning triangle according to one of the previous claims, **characterized in that** the base-reflector-strip and/or the base-plate are covered in their length from 20 to 90 %, preferably 40 to 60 %, by at least one air foil.

6. Warning triangle according to one of the previous claims, **characterized in that** between the air foil as well as the base-reflector-strip and/or the base-plate at least one bar is arranged, wherein the bar has engagement-means for accommodating and fastening swivelled-in supporting legs.

7. Warning triangle according to one of the previous claims, **characterized in that** the base-reflector-strip and/or the base-plate have a reinforcement-strip, wherein between the reinforcement-strip and the air foil a flow-channel is formed out.

8. Warning triangle according to claim 7, **characterized in that** the reinforcement-strip has notches, for guiding the incoming air volumes at least partially into the flow-channel.

9. Warning triangle according to one of the previous claims, **characterized in that** within the triangle, composed of the reflector-strips another triangle made up of flexible material is arranged, which has a triangular shaped cutaway for letting pass wind, wherein the lower length of material of the triangular-composing flexible material is attached along its complete length to the base-plate and/or the base-strip in such a way that a snap-off of the flexible length of material is only possible above the upper edge of the base-plate and/or the base-strip.

10. Warning triangle according to claim 9, **characterized in that** the length of material associated with the side-reflector-strips are not form-lockingly attached with the side-reflector-strips.

## Revendications

1. Un triangle de présignalisation repliable, faisant partie de l'équipement de bord des véhicules, comprenant une barre de base réfléchissante, ainsi que facultativement une plaque de base, équipé en outre de pieds pivotants et de barres latérales réfléchissantes qui sont attachés de manière pivotante à la barre de base réfléchissante et/ou à la plaque de base, ces barres latérales réfléchissantes étant amovibles dans un état déplié et dans un état replié à l'avant comme à l'arrière de leur barre réfléchissante,
**caractérisé par le fait que**
un profil d'aile est monté en dessous de la barre de base réfléchissante et/ou en dessous de la plaque de base, et que le coté du profil d'aile faisant face à la plaque de base et/ou à la barre de base réfléchissante est plat ou présente une moulure concave, et que le coté du profil d'aile opposé à la plaque de base et/ou à la barre de base réfléchissante est de forme convexe.

2. Un triangle de présignalisation conformément à la revendication 1, **caractérisé par le fait que** le profil d'aile est symétrique en section transversale.

3. Un triangle de présignalisation conformément à la revendication 1 ou 2, **caractérisé par le fait que** le profil d'aile est formé d'une seule pièce sous la barre de base réfléchissante et/ou sous la plaque de base.

4. Un triangle de présignalisation conformément à la revendication 1 ou 2, **caractérisé par le fait que** le profil d'aile se trouvant sous la barre de base réfléchissante et/ou sous la plaque de base est composé de plusieurs pièces.

5. Un triangle de présignalisation conformément à l'une des revendications susmentionnées, **caractérisé par le fait que** la barre de base réfléchissante et/ou la plaque de base sont équipées dans leur longueur, de 20 à 90% au moins, préférablement de 40 à 60%, d'un profil d'aile.

6. Un triangle de présignalisation conformément à l'une des revendications susmentionnées, **caractérisé par le fait qu'**au moins une traverse est montée entre le profil d'aile et la barre de base réfléchissante et/ou la plaque de base, et que cette traverse est munie de crans d'arrêt pour recevoir et fixer les pieds repliés.

7. Un triangle de présignalisation conformément à l'une des revendications susmentionnées, **caractérisé par le fait que** la barre de base réfléchissante et/ou la plaque de base est munie d'un élément de renforcement, et qu'un passage de courant d'air est formé entre l'élément de renforcement et le profil d'aile.

8. Un triangle de présignalisation conformément à la revendication 7, **caractérisé par le fait que** l'élément de renforcement présente des creux, permettant de dévier, au moins en partie, les masses d'air affluentes dans le passage de courant d'air.

9. Un triangle de présignalisation conformément à l'une des revendications susmentionnées, **caractérisé par le fait que** dans le triangle formé par les barres réfléchissantes, un autre triangle en matière flexible est monté, dans lequel une découpure en forme de triangle permet le passage de l'air, la bande inférieure de la matière flexible en forme de triangle étant fixée sur toute sa longueur à la plaque de base et/ou à la barre de base, de sorte que la bande flexible ne pourra être rabattue seulement au dessus du bord supérieur de la plaque de base et/ou de la barre de base.

10. Un triangle de présignalisation conformément à la revendication 9, **caractérisé par le fait que** les bandes attribuées aux barres latérales réfléchissantes ne sont pas attachées fixement à ces dernières.
